# EUROPÄISCHE PATENTSCHRIFT

(11) **EP 1 164 408 B1**
(45) Veröffentlichungstag und Bekanntmachung des Hinweises auf die Patenterteilung: **23.04.2003**
(21) Anmeldenummer: 01114509.1
(22) Anmeldetag: 15.06.2001
(51) Int. Cl.: G02B 27/02, G02B 5/00, G02B 27/00

(54) **Objekterkennung mit abgeflachter Intensitätsverteilung**
Object recognition with flattened intensity profile
Reconnaissance d' un objet avec une distribution d'intensité aplatie

(30) Priorität: 16.06.2000 DE 10029852
(43) Veröffentlichungstag der Anmeldung: 19.12.2001
(73) Patentinhaber: SICK AG, 79183 Waldkirch (DE)
(72) Erfinder: Nübling, Ralf Ulrich, 79211 Denzlingen (DE)
(74) Vertreter: Goy, Wolfgang, Dipl.-Phys.

(56) Entgegenhaltungen:
- EP-A- 0 153 002
- EP-A- 0 527 021
- DE-A- 19 809 395
- US-A- 4 341 473
- US-A- 5 486 688
- US-A- 5 686 720

## Beschreibung

Die Erfindung betrifft eine Vorrichtung zum optischen Abbilden von Objekten für eine anschließende Bildverarbeitung in der Objekterkennung nach dem Oberbegriff des Patentanspruchs 1.

Das Erfindungsgebiet betrifft konkret die elektronische Bilderkennung und dabei speziell das Erkennen von Kontrasten auf derartigen Bildern, welche mit einer Kamera, beispielsweise mit einer CCD-Kamera aufgenommen werden. So können derartige Geräte zum Erkennen von Strichcodes auf Waren oder zum Erkennen von automatisch zu verpackenden Waren dienen.

Soweit der Begriff "Licht" verwendet wird, ist dieser generell nicht als Beschränkung auf das sichtbare Licht zu verstehen. Vielmehr soll unter dem Begriff "Licht" allgemein jede Art von elektromagnetischer Strahlung, nämlich jede Art von UV-Licht, IR-Licht sowie sichtbarem Licht zu verstehen sein.

Ein Problem bei den verwendeten Empfangsoptiken bei derartigen Sensoren besteht darin, daß zum Rand des empfangenen Bildes hin die Lichtintensität immer geringer wird. Die Gründe sind zweierlei. Zum einen tritt eine sogenannte Vignettierung auf, d.h. in der Empfangsoptik treten Randverluste auf. Zum anderen gibt es zum Bildrand hin natürliche Helligkeitsabnahmen, weil sich der Öffnungswinkel der effektiven Durchgangsöffnung der Empfangsoptik zum Bildrand hin verringert. Dadurch wird bei diesen Bildverarbeitungssystemen aufgrund des Intensitätsabfalls bei den meisten Empfangsobjektiven zum Rand hin die Auswertung der Bilder aufgrund der geringeren Kontraste schwieriger, und die Energiebilanz wird schlechter. Die Auswertezeit bei einer elektronischen Auswertung der Bilder erhöht sich, wobei in der Software komplizierte Auswertealgorithmen notwendig sind, um die Intensitätsabnahme auswerteseitig rechnerisch kompensieren zu können. Auch andere Auswertungsarten, wie beispielsweise ein visuelles Betrachten des Kamerabildes auf einem Monitor werden durch den Randabfall erschwert. Schließlich wird der nutzbare Dynamikbereich des Empfängers durch diese Inhomogenitäten der Intensitätsverteilung reduziert. Auch die Verwendung hochwertiger Objektive mit Einschränkungen hinsichtlich Baugröße, Lichtstärke oder Kosten etc. bringt nur bedingt Abhilfe. Diese Objektive weisen teilweise - je nach Ausführung - keine Vignettierung auf, der natürliche Helligkeitsabfall zum Bildrand hin besteht aber dennoch.

Die EP-A-0 527 021 zeigt eine Vorrichtung sowie ein Verfahren zum Verarbeiten von Bilddaten der eingangs angegebenen Art. Zu diesem Zweck ist eine Kamera zum optischen Abbilden eines Objektes in Form eines Dokuments als Bild auf einem optoelektronischen Empfänger der Kamera vorgesehen. Dabei weist diese Kamera ein Objektiv auf. Um den Randabfall zu kompensieren, ist eine zusätzliche Beleuchtungseinrichtung mit zwei LEDs um Beleuchten des abzubildenden Dokuments vorgesehen, indem diese Beleuchtungseinrichtung eine zum Rand hin sich erhöhende Intensität bewirkt. Ein Merkmal bei dieser bekannten Abbildungsvorrichtung mit der zugehörigen Beleuchtungseinrichtung besteht darin, daß das Dokument nicht stationär angeordnet ist, sondern daß es vielmehr durch die Abbildungsvorrichtung hindurch transportiert wird. Die Beleuchtungseinrichtung wird daher nur punktuell auf die Scann-Linie gerichtet. Hierfür ist die Beleuchtungsanordnung mit den beiden LEDs zu Erhöhung der Randintensität geeignet, nicht jedoch für den Fall, daß ein Objekt großflächig beleuchtet werden muß.

Die US-A-5 486 688 zeigt eine optische Leseeinrichtung für einen Barcode, welcher mittels drei LEDs beleuchtet wird. Zwischen dem Barcode und einem CCD-Sensor befinden sich Filter, um damit die Lichtintensität im Bereich der optischen Achse zu reduzieren und insgesamt eine gleichmäßige Helligkeit auf dem Sensor zu erhalten.

Die EP-A-0 153 002 zeigt eine Vorrichtung zum optischen Abbilden einer Vorlage, welche an einer Scanlinie vorbeigeführt wird. Beleuchtet wird diese Scanlinie durch fluoreszierende Röhren, vor denen sich jeweils ein Filter befindet, welcher den Randabfall des Bildes kompensieren soll.

Die DE 198 09 395 A zeigt ein Beleuchtungssystem für eine Mikrolithographie-Projektionsbelichtungsanlage, bei dem eine sekundäre Lichtquelle auf ein Retikel abgebildet wird. Die Verzeichnung der Abbildung wird durch mehrere Linsen vor der Lichtquelle kompensiert, indem die Beleuchtung zum Rand hin angehoben ist. Damit wird eine Gleichmäßigkeit der Beleuchtungsintensität über die gesamte Fläche eines zu belichtenden Wavers erreicht.

Die US-A-5 686 720 zeigt ein Verfahren sowie eine Vorrichtung zur Verbesserung der Ausleuchtung unter Verwendung von diffraktiven Optiken. Bei der Ausführungsform in Fig. 4 sind zwei Beleuchtungselemente mit jeweils einer vorgeschalteten Linse sowie einem Prisma vorgesehen.

Die US-A-4 341 473 schließlich zeigt einen Messkopf für einen Densitometer, bei dem eine Linse als Filter ausgebildet ist.

Der Erfindung liegt die **Aufgabe** zugrunde, eine Vorrichtung zum optischen Abbilden von Objekten für eine anschließende Bilderverarbeitung in der Objekterkennung der eingangs angegebenen Art mit einer verbesserten Beleuchtungseinrichtung zu schaffen, mit der auch statisch angeordnete Objekte ein gleichmäßig ausgeleuchtetes Bild auf dem optoelektronischen Empfänger der Kamera ergeben.

Die technische **Lösung** ist gekennzeichnet durch die Merkmale im Kennzeichen des Patentanspruchs 1.

Die Grundidee des erfindungsgemäßen Bildbearbeitungsverfahrens besteht darin, daß von dem optoelektronischen Empfänger der Kamera ein Bild empfangen wird, welches - im Vergleich ohne die erfindungsgemäße Randkorrektur - einen gleichmäßigeren hellen Hintergrund aufweist, so daß sich die abgebildeten Objekte über die gesamte Bildfläche mit gleichmäßigerem Kontrast von diesem Hintergrund abheben. So kann beispielsweise ein ursprünglicher Helligkeitsabfall von 50% ohne Randkorrektur auf 20% mit Randkorrektur im Sinne einer deutlichen Verbesserung reduziert werden. Erfindungsgemäß wird die Kompensation des Randabfalls aufgrund von Vignettierung sowie natürlicher Helligkeitsabnahme bei derartigen Empfangsoptiken durch eine Stärkung von entsprechenden Lichtstrahlenanteilen des Bildes realisiert, nämlich mittels einer beleuchtungsseitigen Kompensation des Randabfalls. Die Grundidee besteht darin, das mittels der Kamera aufzunehmende Objektfeld zum Rand hin stärker auszuleuchten und somit in diesem Randbereich die Lichtintensität bezüglich des mittleren Objektbereiches zu erhöhen. Die Beleuchtung wird somit mittels der abbildenden Optikanordnung so ausgelegt, daß das Objekt mit zunehmendem Abstand von der optischen Achse stärker beleuchtet wird. Idealerweise entspricht der Beleuchtungsverlauf genau dem Inversen des Randabfalls der Empfangsoptik, so daß sich eine homogene Lichtverteilung auf dem Empfänger ergibt. Bei Zoom-Objektiven sowie bei großer Varianz im Objektabstand kann das Beleuchtungssystem auch variabel ausgelegt und analog zum Objektiv eingestellt werden. Konkret befinden sich vor der Lichtquelle in Form einer LED zwei zueinander beabstandete Linsen. Durch die zweite Linse wird dabei nicht die Lichtquelle direkt abgebildet (so daß beispielsweise auch Störungsfelder auf der LED mit abgebildet würden), sondern die zweite Linse bildet die Ebene im Bereich der ersten Linse ab. Durch eine veränderte Wahl des Abstandes zwischen den beiden Linsen sowie deren Abbildungseigenschaften kann die gewünschte Erhöhung der Beleuchtungsintensität zum Rand hin erzielt werden. Die Beleuchtung wird somit - zusammenfassend - so ausgelegt, daß die Vignettierung und die natürliche Helligkeitsabnahme zum Bildrand der Abbildungsoptiken hin vor dem Empfänger durch eine entsprechende Verteilung der Beleuchtungsstärke in der Objektebene kompensiert wird. Somit wird die Beleuchtungsstärke auf dem Empfänger bei vollflächig gleich remittierendem Objekt annähernd die gleiche Größe besitzen. Der Abfall der Intensität zum Rand des Empfängers hin wird kompensiert, d.h. Vignettierung und natürliche Helligkeitsabnahme zum Bildrand hin sowie Beleuchtungsprofil ergeben die gleiche Empfangsintensität an jedem Ort des Empfängers. Als Lichtquelle kann eine diffuse LED-Lichtquelle verwendet werden. Dadurch wird eine gezielte Beleuchtung des Objektes erzielt. Je nach Ausprägung der Beleuchtung entsteht kein Überstrahlen des Meßfeldes. Eine anwenderfreundliche Visualisierung des Meßfeldes ist ohne Zusatzkomponenten möglich.

Durch das erfindungsgemäße Verfahren ergeben sich insgesamt energetische Vorteile und eine deutliche Vereinfachung der nachgeschalteten Auswertesoftware mit einfacheren Auswertealgorithmen bei einer elektronischen Bildverarbeitung. Dadurch reduziert sich die Auswertezeit. Auch eine visuelle Bildverarbeitung durch Betrachtung des Objektbildes auf einem Monitor wird vereinfacht. Außerdem erhält man auf dem Empfänger durch die Lichtumverteilung eine Homogenität ohne Verluste. Schließlich wird durch das erfindungsgemäße Verfahren der Dynamikbereich des Empfängers nicht durch Inhomogenitäten der Energieverteilung reduziert.

Eine Weiterbildung der Beleuchtungseinrichtung schlägt Anspruch 2 vor. Die Grundidee besteht darin, beispielsweise eine Matrix von LEDs zu verwenden, deren Lichtanteile sich in der Objektebene überlappen. Die Verteilung und Ausrichtung der Lichtquellen wird dabei so sein, daß der Randbereich des Objektfeldes stärker ausgeleuchtet wird als der mittlere Bereich im Gebiet der optischen Achse.

Ein Ausführungsbeispiel eines erfindungsgemäßen Sensors wird nachfolgend anhand der Zeichnungen beschrieben. In diesen zeigt:

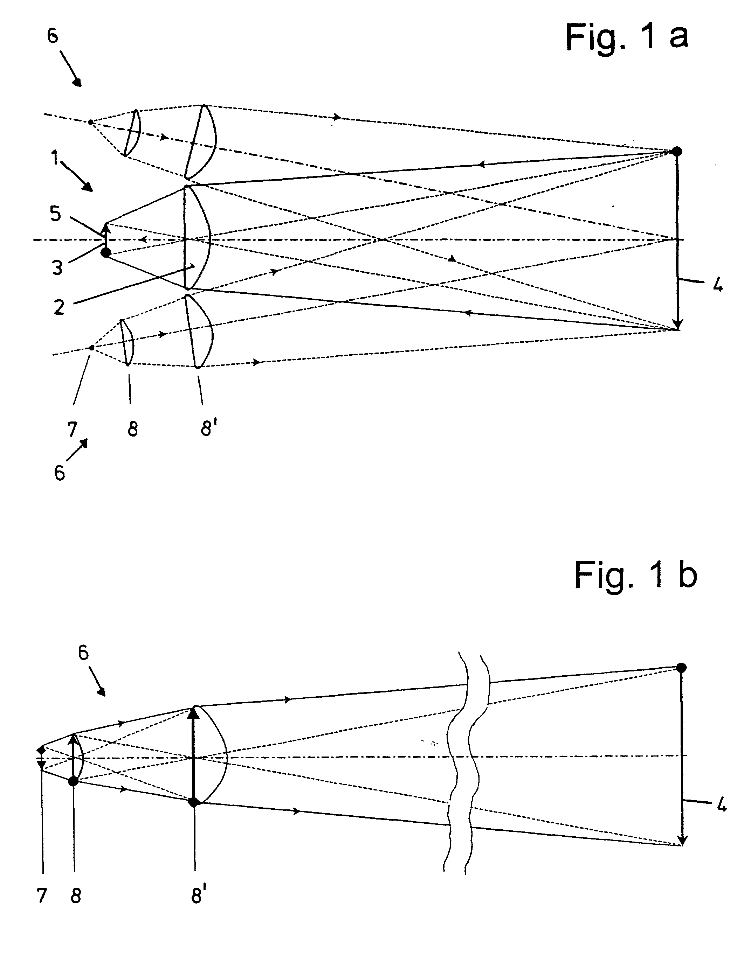

- Fig. 1 a: eine schematische Darstellung des Sensors;
- Fig. 1 b: eine detailliertere Darstellung eines der beiden Einzel-Beleuchtungseinrichtungen bei dem Sensor in Fig. 1 a;
- Fig. 2: die Energieverteilung der Beleuchtungseinrichtung in der Objektebene;
- Fig. 3 a bis 3 c: Diagramme bezüglich der Intensitätsverteilungen.

Der Sensor der Fig. 1 a zeigt in rein schematischer Weise eine Kamera 1 bestehend aus einem Objektiv 2 sowie aus einem lichtempfindlichen, optoelektronischen Empfänger 3. Die Kamera 1 bildet ein Objekt 4 als Bild 5 auf dem Empfänger 3 ab.

Weiterhin ist eine Beleuchtungseinrichtung 6 in Form zweier Einzelbeleuchtungseinrichtungen vorgesehen. Die Beleuchtungseinrichtung 6 weist eine Lichtquelle 7 insbesondere in Form einer LED auf, weiterhin zwei Linsen 8, 8'. Die Lichtquelle 7 sowie die beiden Linsen 8, 8' bilden eine Beleuchtungsanordnung. Denkbar ist, daß die Linse 8 bereits Bestandteil der LED ist.

Die Funktionsweise des Sensors ist wie folgt:

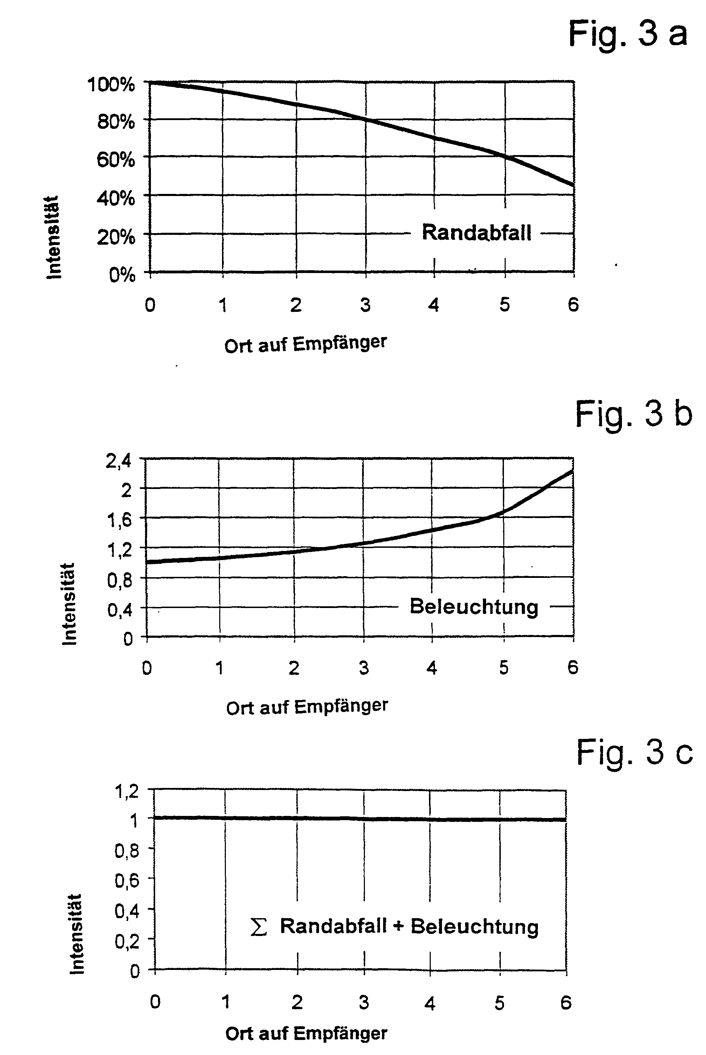

Ohne Beleuchtungseinrichtung 6 würde das Objekt 4 mit einem Intensitätsabfall bezüglich der Helligkeit zum Rand hin wegen der Vignettierung sowie der natürlichen Helligkeitsabnahme des Objektivs 2 abgebildet (Fig. 3 a).

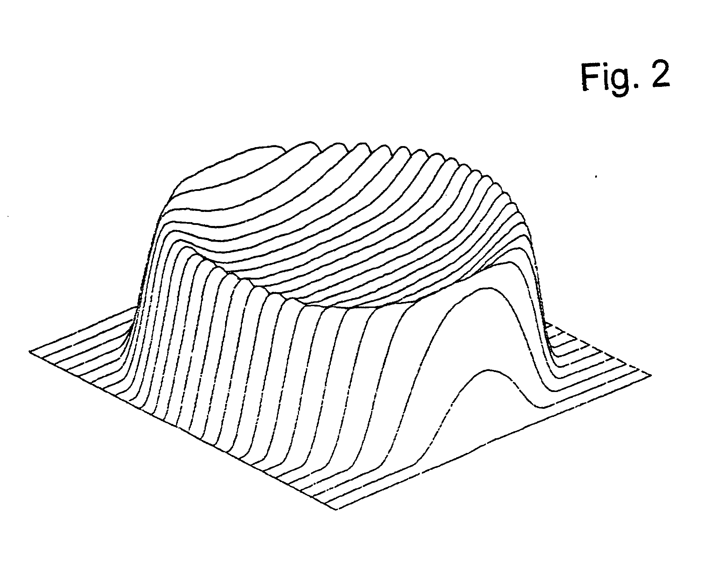

Die Beleuchtungseinrichtung 6 kompensiert diesen Randabfall der Empfangsoptik dadurch, daß die Beleuchtungseinrichtung 6 den Randbereich des Objektes 4 stärker ausleuchtet als den Bereich der optischen Achse (Fig. 2 sowie Fig. 3 b). Dies wird durch die spezielle Anordnung der Linsen 8, 8' erreicht, wobei der Strahlengang in Fig. 1 b detaillierter dargestellt ist. Dem Grunde nach handelt es sich um eine Beleuchtungsanordnung, bei der sich vor der Lichtquelle 7 zwei zueinander beabstandete Linsen 8, 8' befinden. Der Vorteil dieser Beleuchtungsanordnung besteht darin, daß durch die zweite Linse 8' nicht die Lichtquelle 7 direkt abgebildet wird (so daß beispielsweise auch Störungsfelder auf der Lichtquelle 7 mit abgebildet würden), sondern daß die zweite Linse 8' die Ebene im Bereich der ersten Linse 8 abbildet. Durch entsprechende Wahl des Abstandes zwischen den beiden Linsen 8, 8' sowie deren Abbildungseigenschaften wird eine Erhöhung der Beleuchtungsintensität zum Rand hin erzielt. Da sich somit dem Randabfall in dem Objektiv 2 der Empfangsoptik die Randerhöhung in der Beleuchtung des Objektes 4 durch die Beleuchtungseinrichtung 6 überlagert, ist die Intensitätsverteilung des Bildes 5 ausgehend von der optischen Achse bis zum Rand hin im wesentlichen konstant (Fig. 3 c).

### Bezugszeichenliste

- 1: Kamera
- 2: Objektiv
- 3: optoelektronischer Empfänger
- 4: Objekt
- 5: Bild
- 6: Beleuchtungseinrichtung
- 7: Lichtquelle
- 8, 8': Linse

## Patentansprüche

1. Vorrichtung zum optischen Abbilden von Objekten (4) für eine anschließende Bildverarbeitung in der Objekterkennung,
mit einer ein Objektiv (2) aufweisenden Kamera (1) zum optischen Abbilden des Objektes (4) als Bild (5) auf einem optoelektronischen Empfänger (3) der Kamera (1) sowie mit einer zusätzlichen Beleuchtungseinrichtung (6) mit einer LED (7) zum Beleuchten des abzubildenden Objektes (4) mit einer zum Rand hin sich erhöhenden Intensität,
**dadurch gekennzeichnet,**
**daß** vor der LED (7) eine refraktive Optik mit zwei zueinander beabstandeten Linsen (8,8') angeordnet ist,
wobei die bezüglich der LED (7) zweite Linse (8') die Ebene im Bereich der bezüglich der LED (7) ersten Linse (8) derart abbildet, daß die Beleuchtungsintensität der LED (7) zum Rand hin erhöht ist.

2. Vorrichtung nach dem vorhergehenden Anspruch,
**dadurch gekennzeichnet,**
**daß** die Beleuchtungseinrichtung (6) mehrere einzelne LEDs (7) aufweist, welche derart verteilt und ausgerichtet sind, daß das Objekt (4) zum Rand hin stärker beleuchtet wird.

## Claims

1. Device for optical imaging of objects (4) for subsequent image processing in form and positive recognition, with a camera (1) with a lens (2) for optical imaging of the object (4) as an image (5) on an optoelectronic receiver (3) of the camera (1) and with an additional illumination device (6) with an LED (7) for illuminating the object (4) to be imaged with an intensity increasing towards the edge, **characterised in that** arranged before the LED (7) is a refractive lens system with two lenses (8, 8') spaced apart from each other, where the lens (8') furthest from the LED (7) images the plane in the area of the lens (8) closest to the LED (7) such that the illumination intensity of the LED (7) increases towards the edge.

2. Device according to the preceding claim, **characterised in that** the illumination device (6) has several individual LEDs (7) which are distributed and aligned such that the object (4) is illuminated more strongly towards the edge.

## Revendications

1. Dispositif de représentation optique d'objets (4) pour un traitement d'image consécutif dans le domaine de la reconnaissance d'objets,
comportant une caméra présentant un objectif (2) pour la représentation optique de l'objet (4) sous la forme d'une image (5) sur un récepteur optoélectronique (3) de la caméra (1) ainsi qu'un dispositif d'éclairage supplémentaire (6) présentant une DEL (7) pour éclairer l'objet à représenter (4) avec une intensité croissante vers le bord,
**caractérisé par le fait**
**qu'**une optique réfractive constituée de deux lentilles (8, 8') distantes l'une de l'autre est disposée devant la DEL (7),
la deuxième lentille (8') par rapport à la DEL (7) représentant le plan au niveau de la première lentille (8) par rapport à la DEL (7) de telle façon que l'intensité d'éclairage de la DEL (7) est augmentée vers le bord.

2. Dispositif selon la revendication précédente,
**caractérisé par le fait**
**que** le dispositif d'éclairage (6) présente plusieurs DEL (7) individuelles distribuées et orientées de telle façon que l'objet (4) est plus fortement éclairé en allant vers les bords.
